(19) Europäisches Patentamt
European Patent Office
Office européen des brevets

(11) EP 0 585 162 B1

(12) # FASCICULE DE BREVET EUROPEEN

(45) Date de publication et mention de la délivrance du brevet:
**21.10.1998 Bulletin 1998/43**

(51) Int Cl.[6]: **C08G 65/32**, H01M 10/40, H01M 6/18

(21) Numéro de dépôt: **93402047.0**

(22) Date de dépôt: **11.08.1993**

(54) **Copolymères réticulables obtenus par polycondensation et matériau à conduction ionique les contenant**

Vernetzbare copolymere erhältlich durch Polykondensation und Ionenleitenden Materialien solche copolymere enthaltend

Cross-linkable copolymers obtained by polycondensation and ionically-conducting materials containing them

(84) Etats contractants désignés:
**AT BE DE DK ES FR GB IT NL PT SE**

(30) Priorité: **14.08.1992 FR 9210033**

(43) Date de publication de la demande:
**02.03.1994 Bulletin 1994/09**

(73) Titulaires:
- **CENTRE NATIONAL DE LA RECHERCHE SCIENTIFIQUE (CNRS) 75794 Paris Cédex 16 (FR)**
- **HYDRO-QUEBEC Montréal Québec H2Z 1A4 (CA)**

(72) Inventeurs:
- **Alloin, Fannie F-38100 Grenoble (FR)**
- **Armand, Michel F-38410 Saint-Martin-d'Uriage (FR)**
- **Sanchez, Jean-Yves F-38330 Saint-Ismier (FR)**

(74) Mandataire: **Sueur, Yvette et al Cabinet SUEUR & L'HELGOUALCH, 78, Rue Carnot 95240 Cormeilles-en-Parisis (FR)**

(56) Documents cités:
**EP-A- 0 445 926**
**GB-A- 2 164 047**
**US-A- 4 002 689**
**US-A- 4 127 494**

- **MAKROMOL. CHEM. vol. 191 , 1990 pages 397 - 403 KOHJIYA S. ET AL 'Kinetic study on the Menschutkin reaction'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne des copolymères, leur procédé de préparation et leur utilisation pour l'élaboration de matériaux à conduction ionique.

On connaît les électrolytes polymères obtenus par dissolution d'un sel dans un polymère solvatant comportant des hétéroatomes. De tels électrolytes dont le solvant est un polyoxyde d'éthylène ou un copolymère d'oxyde d'éthylène, sont décrits par exemple dans EP-A-13199 (M. Armand, M. Duclot). Ces électrolytes polymères ont de nombreuses applications, en particulier dans le domaine des générateurs électrochimiques, des systèmes de modulation de la lumière (M. Armand et al, EP-A-253713), des capteurs, par exemple pour des membranes sélectives ou de référence (A. Hammou et al, FR-A-2601017 ou US-A-4923950).

Le polyoxyde d'éthylène est un polymère semi-cristallin qui forme avec les sels des complexes stoechiométriques. Les phases amorphes conductrices de ces complexes n'existent qu'au-dessus d'une température eutectique comprise en général entre 40°C et 65°C selon la nature des sels complexés. De bonnes conductivités à température ordinaire ne sont obtenues qu'avec des systèmes macromoléculaires présentant une cristallinité faible ou nulle. De nombreux travaux ont été effectués pour l'amélioration des propriétés de conduction de ces matériaux. Ils ont abouti par exemple à la formation de copolymères à base d'oxyde d'éthylène (M. Armand et al, FR-A-2542322 ou US-A-4578326). La copolymérisation d'oxyde d'éthylène avec d'autres époxydes tels que l'oxyde de propylène ou le méthylglycidyl éther diminue sensiblement la cristallinité du matériau. Toutefois, l'introduction statistique de défauts se traduit par une perte notable du pouvoir solvatant et dissociant de la séquence régulière polyoxyde d'éthylène. La préparation de copolymères ayant des masses macromoléculaires élevées, supérieures à $10^5$, et possédant de bonnes propriétés mécaniques en l'absence de réticulation, exige des réactifs de grande pureté et le contrôle reproductible du taux de comonomères introduits est difficile du fait de la différence de réactivité entre l'oxyde d'éthylène et ses homologues.

Par polycondensation des oligooxyéthylène glycols ($M_W \approx 200 - 1000$) avec le dichlorométhane, on a obtenu des polymères amorphes ayant une bonne conductivité, mais une tenue mécanique médiocre [C.V. Nicholas, D.J. Wilson, C. Booth & R.J.M. Gilles, Brit. Polym. J. 20 289 (1988)]. En outre, ces matériaux ne présentent pas de fonctions réactives et ne peuvent donc pas être réticulés.

On connaît également la préparation de réseaux réticulés par des isocyanates (FR 2485274, US-A-4357401, H. Cheradame et al). Toutefois, l'introduction de ponts uréthanes rend ces électrolytes réactifs, en particulier vis-à-vis du lithium.

La présente invention a pour but de fournir des matériaux à conduction ionique comportant un électrolyte solide polymère et présentant à la fois une bonne conductivité et une bonne tenue mécanique.

A cet effet, la présente invention a pour objet une famille de copolymères réticulables.

L'invention a également pour objet un procédé de préparation des dits copolymères.

Enfin, l'invention a pour objet des matériaux à conduction ionique dont le solvant est constitué essentiellement par un copolymère précité.

Un copolymère selon la présente invention est un copolymère réticulable constitué par des segments organiques A non réticulables par voie radicalaire ou par une réaction de Diels Alder, identiques ou différents, ayant chacun une valence i telle que $1 \leq i \leq 6$ et des segments $Z(CH_2)_j$ identiques ou différents dans chacun desquels Z représente un radical organique ayant une valence j telle que $1 \leq j \leq 6$, les radicaux Z possédant en outre au moins une fonction permettant une réticulation par voie radicalaire ou par une réaction de Diels Alder, *les radicaux Z ne possédant pas de groupe -CBr=CBr- ;*

- chaque segment Aétant relié à au moins un segment $Z(CH_2)_j$ par une fonction Y et chaque segment $Z(CH_2)_j$ étant relié à au moins un segment A par une fonction Y, la fonction Y étant une fonction éther ou une fonction amine secondaire ou tertiaire ;
- la moyenne molaire pondérée des valences i des segments A et la moyenne molaire pondérée des valences j des radicaux Z étant chacune supérieure ou égale à 2.

Les copolymères de la présente invention sont obtenus par une réaction de polycondensation en présence d'une base B, d'au moins un composé $A(YH)_i$ avec au moins un composé $Z(CH_2X)_j$, A, i, Y, Z et j ayant les significations données ci-dessus, X étant un groupe partant, les proportions relatives des différents $A(YH)_i$ étant telles que le rapport du nombre de radicaux Y au nombre de segments A soit au moins égal à 2, les proportions relatives des différents $Z(CH_2X)_j$ étant telles que le rapport du nombre de radicaux X au nombre de segments Z soit au moins égal à 2.

Le groupe partant X peut être un halogénure, plus particulièrement un chlorure, un bromure ou un iodure, ou bien un sulfate $R'OSO_3$ ou un sulfonate $R'SO_3$ dans lesquels R' représente un groupe organique ayant moins de 20 atomes de carbone. De préférence, R' représente un groupe alkyle, un groupe aryle, un groupe alkylaryle, ces groupes pouvant être éventuellement halogénés.

Conformément à la présente invention, un segment A est un segment organique non réticulable par voie radicalaire

ou par une réaction de Diels Alder.

Parmi les segments appropriés pour A, on peut citer les segments solvatants. Les segments solvatants peuvent être choisis parmi les homopolymères d'oxyde d'éthylène ou d'oxyde de propylène. Ils peuvent également être choisis parmi les copolymères d'oxyde d'éthylène et d'oxyde de propylène, les copolymères d'oxyde d'éthylène ou d'oxyde de propylène avec un comonomère polymérisable par formation de liaisons éthers. Le comonomère peut être choisi parmi l'oxyméthylène, l'oxétane, le tétrahydrofurane, le méthylglycidyléther et le dioxolane. Parmi les copolymères, on préfère tout particulièrement ceux qui contiennent au moins 70% en moles d'unités dérivées d'oxyde d'éthylène ou d'oxyde de propylène.

Parmi les segments appropriés pour A, on peut également citer les segments non solvatants. De tels segments non solvatants comprennent les radicaux alkylènes, par exemple ceux qui proviennent des $\alpha,\omega$-alcanediols, les radicaux arylènes, par exemple ceux qui proviennent des bisphénols, les radicaux arylalkylènes, par exemple ceux qui proviennent des $\alpha,\alpha'$- xylène diols, les segments polysiloxanes.

Parmi les radicaux appropriés pour Z, on peut citer ceux qui possèdent au moins une double liaison éthylénique. Le radical Z peut également être choisi parmi ceux qui possèdent une fonction susceptible de s'engager dans une réaction de Diels Alder. On préfère tout particulièrement les radicaux Z qui possèdent des fonctions capables d'augmenter la réactivité des groupes partants X des réactifs $Z(CH_2X)_j$ vis à vis des substitutions nucléophiles. A titre d'exemple, on peut citer les radicaux Z dans lesquels l'atome de carbone lié au groupe $CH_2X$ du réactif $Z(CH_2X)_j$ fait partie d'une double liaison éthylénique, d'un noyau aromatique, d'une fonction cétone, d'une fonction nitrile ou dans lesquels l'atome de carbone lié au groupe $CH_2X$ du réactif $Z(CH_2X)_j$ est remplacé par un atome de soufre faisant partie d'une fonction sulfone. Ces radicaux particuliers facilitent la mise en oeuvre du procédé de préparation des copolymères.

A titre d'exemple, on peut citer les radicaux provenant des composés $Z(CH_2X)_j$ suivants :

- les dérivés d'alcènes, par exemple du cis 2-butène, du trans 2-butène, du méthyl 2-propène, du cis 2,4-hexadiène, qui répondent respectivement aux formules suivantes :

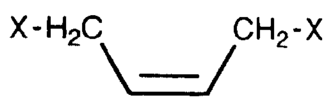

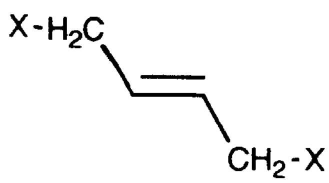

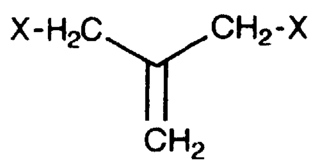

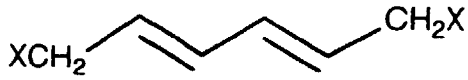

- les dérivés de styrène, par exemple d'un polyméthyl styrène qui répondent à la formule

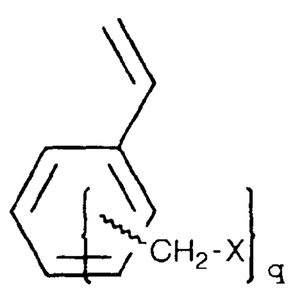

avec q = 2, 3, 4 ou 5,

- le dérivé du diméthyl 2,5-furane qui répond à la formule

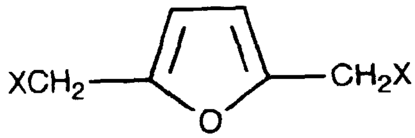

De préférence, la fonction amine est une fonction NR telle que R représente H ou un radical organique ayant au plus 30 atomes de carbone choisi parmi les radicaux alkyles, les radicaux aryles, les radicaux arylalkyles et les radicaux oxaalkyles. Les fonctions NH et $NCH_3$ sont particulièrement préférées.

Lorsque Y représente NH, la réaction d'un groupement amine primaire d'un composé $A(YH)_i$ sur deux groupements $CH_2X$ adjacents d'une même molécule $Z(CH_2X)_j$ peut entraîner la formation d'hétérocycles, selon le schéma

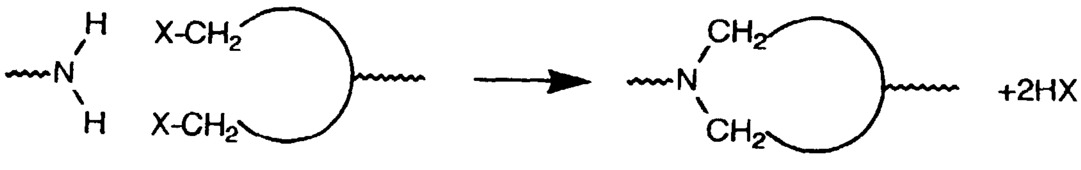

La base B est choisie parmi les hydroxydes de métaux alcalins ou alcalino-terreux, les hydroxydes d'ammoniums quaternaires, en particulier les résines échangeuses d'anions contenant des groupements benzyltrialkylammoniums sous forme d'hydroxyde, les hydrures, les amidures ou les alkoxydes de métaux alcalins ou alcalino-terreux, les bases organiques non nucléophiles et difficilement quaternisables telles que le 1,8-bis(diméthylamino)naphtalène et la 1,2,2,6,6 pentaméthyl pipéridine.

Les propriétés d'un copolymère selon la présente invention peuvent être prédéterminées par le choix des segments A et/ou des radicaux Z.

Un copolymère selon la présente invention peut comporter des segments A tous identiques. Il peut également comporter des segments A différents. Le choix de segments A solvatants permet de diminuer, voire de supprimer la cristallinité du copolymère et donc d'améliorer sa conductivité ionique. Il peut améliorer également ses propriétés mécaniques. L'introduction de segments non solvatants permet d'adapter certaines propriétés du copolymère, par exemple ses propriétés mécaniques ou la conductivité du réseau ; elle permet également d'apporter des propriétés nouvelles propres aux segments non solvatants telles que l'adhésivité, ou d'introduire des fonctions chimiques.

Lors de la préparation du copolymère, la substitution partielle de molécules $Z(CH_2X)_j$ par des molécules $Z'(CH_2X)_{j'}$, dans lesquelles Z' est un radical qui a la valence j' et qui ne possède pas de fonctions réactives vis-à-vis de la réticulation radicalaire pour un amorceur radicalaire donné, ni de fonctions actives dans une réaction de Diels Alder, permet de diminuer la concentration en noeuds de réticulation, et constitue donc un moyen supplémentaire de contrôler les propriétés mécaniques et la conductivité du copolymère réticulé. Les réactifs $Z'(CH_2X)_{j'}$ peuvent être choisis par exemple parmi les composés répondant aux formules suivantes :

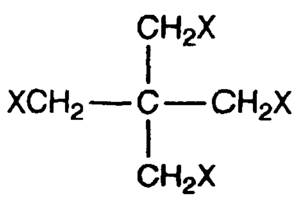

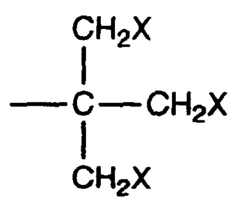

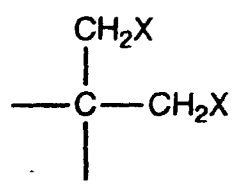

Une famille particulièrement intéressante de radicaux Z' comprend les radicaux Z' qui possèdent des fonctions capables d'augmenter la réactivité des groupes partants X vis à vis des substitutions nucléophiles. Parmi ces radicaux, on peut citer les radicaux Z' dans lesquels l'atome de carbone lié au groupe $CH_2X$ du réactif $Z'(CH_2X)_{j'}$ fait partie d'une double liaison encombrée, d'un noyau aromatique, d'une fonction cétone, d'une fonction nitrile ou dans lesquels l'atome de carbone lié au groupe $CH_2X$ du réactif $Z'(CH_2X)_{j'}$ est remplacé par un atome de soufre faisant partie d'une fonction sulfone. Ces radicaux particuliers comprennent les radicaux poly(méthylène)arylène, tel que par exemple le $\alpha,\alpha'$-dichlorométaxylène. La stoechiométrie de la réaction doit alors prendre en compte la totalité des groupements X apportés par les co-réactants.

Les copolymères obtenus dans ce cas particulier sont constitués par des segments organiques A non réticulables

par voie radicalaire ou par une réaction de Diels Alder, identiques ou différents, ayant chacun une valence i telle que $1 \leq i \leq 6$, des segments $Z(CH_2)_j$ identiques ou différents dans chacun desquels Z représente un radical organique ayant une valence j telle que $1 \leq j \leq 6$, les radicaux Z possédant en outre au moins une fonction permettant une réticulation par voie radicalaire ou par une réaction de Diels Alder, et des segments $Z'(CH_2)_{j'}$ identiques ou différents dans chacun desquels Z' représente un radical organique ayant une valence j' telle que $1 \leq j' \leq 6$, les radicaux Z' ne possédant pas de fonction permettant une réticulation par voie radicalaire ou par une réaction de Diels Alder;

- chaque segment A étant relié à au moins un segment $Z(CH_2)_j$ ou $Z'(CH_2)_{j'}$ par une fonction Y, chaque segment $Z(CH_2)_j$ ou $Z'(CH_2)_{j'}$ étant relié à au moins un segment A par une fonction Y, la fonction Y étant une fonction éther ou une fonction amine secondaire ou tertiaire ;
- la moyenne molaire pondérée des valences i des segments A et la moyenne molaire pondérée des valences j et j' de l'ensemble des radicaux Z et Z' étant chacune supérieure ou égale à 2.

Les copolymères de la présente invention peuvent être utilisés tels quels ou sous forme réticulée, pour l'élaboration de matériaux à conduction ionique.

Les matériaux à conduction ionique de la présente invention sont essentiellement constitués par un sel facilement dissociable et un copolymère selon la présente invention.

Lorsque le degré de polycondensation du copolymère selon l'invention est suffisant, le copolymère peut être utilisé tel quel pour la préparation d'un matériau à conduction ionique. Toutefois sa mise en oeuvre n'est pas aisée.

On préfère utiliser, pour l'élaboration de matériaux à conduction ionique, des copolymères ayant un degré de polycondensation relativement faible, tels que ceux obtenus à partir d'un ou plusieurs composés $A(YH)_i$ et d'un ou plusieurs composés $Z(CH_2X)_j$ (et éventuellement d'un ou plusieurs composés $Z'(CH_2X)_{j'}$), pour lesquels la moyenne molaire pondérée est pratiquement égale à 2 aussi bien pour i que pour j (ou j et j' le cas échéant). De tels copolymères seront réticulés grâce aux fonctions réticulables présentes sur les segments Z.

Les copolymères contenant des segments solvatants sont préférés pour l'élaboration de matériaux à conduction ionique. Les segments A solvatants constitués par des homopolymères d'oxyde d'éthylène ou d'oxyde de propylène ou un copolymère d'oxyde d'éthylène ou d'oxyde de propylène et d'un comonomère polymérisable par formation de liaisons éthers dans lesquels le comonomère représente au plus 30% en moles sont particulièrement préférés. Les copolymères d'oxyde d'éthylène et d'oxyde de propylène sont particulièrement intéressants.

Le sel introduit dans le copolymère avant réticulation ou dans le polymère réticulé est choisi parmi les sels utilisés habituellement pour les matériaux solides à conduction ionique. A titre d'exemple on peut citer les sels $(1/mM)^+X^{3-}$, M représentant un ion d'un métal ayant la valence m, choisi parmi les métaux alcalins, les métaux alcalino-terreux, les métaux de transition et les terres rares, ou les ions ammonium, amidinium ou guanidinium ; $X^3$ représentant un anion à charge électronique délocalisée, par exemple $Br^-$, $ClO_4^-$, $AsF_6^-$, $R_FSO_3^-$, $(R_FSO_2)_2N^-$, $(R_FSO_2)_3C^-$, $R_F$ représentant un groupement perfluoroalkyle ou perfluoroaryle, en particulier un groupement perfluoroalkyle ou perfluoroaryle ayant au plus 8 atomes de carbone, plus particulièrement $CF_3$- ou $C_2F_5$-.

Le sel peut également être choisi parmi les sels répondant à la formule $(1/nM)^+[(R_FSO_2)_2CY^1]^-$ dans laquelle $Y^1$ représente un groupement attracteur d'électrons choisi parmi -C≡N et les groupements $R''Z^1$- dans lesquels $Z^1$ représente un groupement carbonyle, un groupement sulfonyle ou un groupement phosphonyle et R" représente un groupement organique monovalent possédant éventuellement une fonction réticulable par voie radicalaire ou par une réaction de Diels Alder, M et $R_F$ ayant la signification donnée précédemment. De tels composés peuvent être préparés par réaction d'un composé $(1/nM)^+[(R_FSO_2)_2CH]^-$ avec un composé $Y^1X^1$ en présence d'une base aprotique nucléophile Nu, $X^1$ représentant un halogène ou un pseudo-halogène. Les sels de lithium sont particulièrement préférés, plus spécialement $(CF_3SO_2)_2N^-Li^+$ et $(CF_3SO_2)_3C^-Li^+$. Des mélanges de sels peuvent être utilisés. Ces sels et leur procédé de préparation sont décrits dans FR-A-2683254 déposé le 8.11.1991, auquel on se référera pour plus de détails.

Les copolymères de la présente invention peuvent également être utilisés pour l'élaboration d'un matériau à conduction ionique comprenant une solution solide d'un ou plusieurs sels dans un polymère, dans lequel le transport et la mobilité d'un cation métallique $M'^{n+}$ ayant la valence n sont assurés par au moins un anion complexe correspondant à la formule générale $[M'(Z^3)_n(Y^3)_p]^{p-}$, formé entre un ligand anionique $(Z^3)^-$, un ligand anionique $(Y^3)^-$ et le cation $M'^{n+}$, avec $1 \leq n \leq 5$ et $1 \leq p \leq 3$. Le matériau est alors un complexe polymère qui peut être représenté par la formule globale

$$\mathrm{Poly(u.s.)}_u\ A^3[M'_x(Z^3)_z(Y^3)_y]$$

dans laquelle

- $A^3$ est un cation de valence p susceptible d'être facilement solvaté par le polymère, avec p=1 ou 2;
- (u.s.) désigne l'unité de solvatation du polymère;

- u représente le nombre d'unités de solvatation portées par la trame macromoléculaire nécessaires pour solvater un cation $A^3$;
- x, y et z sont tels que la relation z + y - nx = p soit satisfaite et qu'ils permettent la coexistence en quantités finies, de l'anion complexe $[M'(Z^3)_n(Y^3)_p]^{p-}$ et d'une espèce choisie dans le groupe constitué par l'anion $(Z^3)^-$, l'anion $(Y^3)^-$, l'anion complexe $[M'(Z^3)_n(Y^3)_{p+1}]^{(p+1)-}$, l'anion complexe $[M'(Z^3)_{n+1}(Y^3)_p]^{(p+1)-}$ et l'espèce neutre $M'(Z^3)_n$.

Les matériaux à conduction ionique correspondant à ce cas particulier sont décrits dans FR-A-2673769, déposé le 7 mars 1991, auquel on se reportera pour plus de détails. Ces matériaux sont obtenus par un procédé dans lequel un sel $A^3(Y^3)_p$ et un sel $M'(Z^3)_n$ sont dissous dans un copolymère de la présente invention, dans des proportions telles que la relation z + y - nx = p soit satisfaite et qu'elles permettent la coexistence en quantités finies, de l'anion complexe $[M'(Z^3)_n(Y^3)_p]^{p-}$ et d'une espèce choisie dans le groupe constitué par l'anion $(Z^3)^-$, l'anion $(Y^3)^-$, l'anion complexe $[M'(Z^3)_n(Y^3)_{p+1}]^{(p+1)-}$ et l'espèce neutre $M'(Z^3)_n$.

Un matériau à conduction ionique de la présente invention, dans lequel le copolymère selon l'invention est réticulé, est obtenu en soumettant le copolymère à l'action de la chaleur ou d'un rayonnement énergétique tel qu'un rayonnement ultraviolet, des rayons $\gamma$ ou un faisceau d'électrons, éventuellement en présence d'un amorceur radicalaire. L'amorceur radicalaire peut être choisi par exemple parmi le peroxyde de benzoyle, l'azobisisobutyronitrile (AIBN), l'acide azobis cyanovalérique, le peroxyde de dicumyle (Dicup) ou les disulfures, par exemple l'acide 3,3'-dithiodipropionique. Le peroxyde de benzoyle est particulièrement préféré. L'amorceur radicalaire n'est pas nécessaire lorsque la réticulation se fait par une réaction de Diels Alder.

Dans un premier mode de réalisation, un matériau à conduçtion ionique est obtenu par dissolution du copolymère, du sel, et éventuellement d'un amorceur radicalaire, dans un solvant commun. La quantité d'amorceur utilisée est avantageusement de 0,1 à 5% en poids par rapport au copolymère. Le solvant est choisi parmi les solvants volatils ; à titre d'exemple de tel solvant, on peut citer l'acétonitrile, le tétrahydrofurane et l'acétone. La solution visqueuse obtenue est dégazée, puis épandue sur un support approprié, par exemple une plaque de PTFE. Après évaporation du solvant, le film obtenu est porté à une température entre 70°C et 120°C selon l'amorceur utilisé, pendant 4 heures.

Dans un autre mode de réalisation, on effectue d'abord la réticulation du copolymère, en l'absence de sel, et l'on élabore ensuite une membrane. Le sel est alors introduit dans la membrane de la manière suivante : on réalise une solution très concentrée du sel dans un solvant polaire volatil, on la fait absorber par la membrane, puis l'on évapore le solvant. La quantité de sel introduite est déterminée par différence entre le poids initial de la membrane et son poids final.

Dans un troisième mode de réalisation, la réticulation d'un copolymère de la présente invention est effectuée à l'aide d'un amorceur radicalaire de polymérisation, en présence d'un monomère portant un groupement ionique et un groupement réticulable par voie radicalaire. Les dérivés de sultones perhalogénées constituent des monomères particulièrement préférés. De tels dérivés peuvent être choisis par exemple parmi ceux qui répondent à la formule générale (1) $ECFX^2\text{-}SO_2Z^2$dans laquelle :

- E représente l'un des groupes $R^1R^2N\text{-}CO\text{-}$, $R^3\text{-}O\text{-}CF_2\text{-}$ ou $R^3\text{-}$;
- $Z^2$ représente un groupement ionique ;
- $X^2$ représente F, Cl, H ou $R_F$ ;
- les radicaux $R^1$, $R^2$ et $R^3$ identiques ou différents, sont choisis parmi les radicaux organiques non perfluorés comportant une fonction polymérisable par voie radicalaire;
- $R_F$ est choisi parmi les radicaux perfluoroalkyle et les radicaux perfluoroaryle.

Le groupement ionique $Z^2$ est avantageusement choisi parmi $1/mM^{m+}[\text{-}O]^-$, $1/mM^{m+}[\text{-}NSO_2Q]^-$, $1/mM^{m+}[\text{-}CH(SO_2Q)]^-$ et $1/mM^{m+}[\text{-}C(SO_2Q)_2]^-$, Q représentant $\text{-}R_F$ ou $\text{-}CFX^2\text{-}E$ et $M^{m+}$ étant tel que défini précédement.

Lorsque E représente un groupe $R^1R^2N\text{-}CO\text{-}$, les monomères (1) peuvent être préparés par réaction d'un fluorure d'acide sulfonyl acétique $F\text{-}COCFX^2\text{-}SO_2F$ avec une amine $R^1R^2NH$ en présence d'une base.

Lorsque E représente un groupe $R^3\text{-}O\text{-}CF_2\text{-}$, les monomères (1) peuvent être obtenus à partir du fluorure d'acide sulfonylacétique par un procédé en trois étapes : réaction du fluorure d'acide sulfonylacétique avec un fluorure ; mise en contact du perfluoroalcoxyde obtenu avec un réactif $R^3Y^2$ pour obtenir le composé $R^3O\text{-}CF\text{-}CFX\text{-}SO_2F$ ; réaction de ce composé avec le réactif approprié pour remplacer le fluor du groupe $SO_2F$ par un groupement ionique choisi parmi $1/mM^{m+}[\text{-}O]^-$, $1/mM^{m+}[\text{-}NSO_2R]^-$, $1/mM^{m+}[\text{-}CH(SO_2R_F)]^-$ ou $1/mM^{m+}[\text{-}C(SO_2R_F)_2]^-$.

Lorsque le groupe E est $R^3\text{-}$, les monomères (1) sont obtenus à partir du fluorure d'acide sulfonylacétique par un procédé en trois étapes. Au cours d'une première étape, le fluorure d'acide sulfonylacétique est traité par l'eau, ce qui provoque une hydrolyse suivie d'une décarboxylation. Le composé obtenu possède sur le carbone en $\alpha$ un proton présentant un caractère acide permettant la formation d'un carbanion qui donne lieu, au cours d'une deuxième étape, à une réaction de substitution nucléophile en présence d'une base. Au cours d'une troisième étape, on fait réagir le composé obtenu avec le réactif approprié pour remplacer le fluor du groupe $SO_2F$ par un groupement ionique. De tels

monomères sont décrits dans FR-A-2687671 déposé le 21.02.1992, auquel on se reportera pour plus de détails.

Bien entendu, les matériaux à conduction ionique de la présente invention peuvent contenir en outre des additifs utilisés habituellement dans les matériaux à conduction ionique tels que des plastifiants, des stabilisants, suivant les propriétés finales recherchées.

Les matériaux à conduction ionique de la présente invention peuvent être préparés facilement et leur mise en oeuvre est aisée du fait de la faible masse moléculaire totale.

Les matériaux à conduction ionique de la présente invention sont utilisables comme électrolyte solide polymère dans une cellule électrochimique. Une cellule électrochimique selon l'invention comporte une électrode négative et une électrode positive séparées par un électrolyte constitué essentiellement par un copolymère selon l'invention et un sel facilement dissociable.

Les matériaux à conduction ionique de la présente invention sont également utiles pour l'élaboration d'un générateur électrochimique, rechargeable ou non. Un tel générateur comprend une électrode négative et une électrode positive séparées par un électrolyte constitué essentiellement par un copolymère selon l'invention et un sel facilement dissociable.

Les matériaux à conduction ionique de la présente invention sont également utiles dans d'autres systèmes électrochimiques tels que les systèmes de modulation de lumière, par exemple les systèmes électrochromes, pour l'élaboration de membranes sélectives ou membranes de référence dans les capteurs, pour l'élaboration de supercapacités.

La présente invention est illustrée par les exemples suivants donnés à titre illustratif mais non limitatif.

EXEMPLE 1

Dans un ballon tricol muni d'un palier d'agitation mécanique, d'une arrivée d'argon et d'une ampoule à brome, on a introduit 20 g de poly(oxyéthylène) glycol de masse 2000 (commercialisé par Aldrich sous la référence 29,590-6) et 2,4 g d'hydroxyde de sodium finement broyé. Le mélange a été porté à 45°C sous forte agitation mécanique. Après obtention d'un mélange visqueux, on a ajouté lentement 1,25 g ($10^{-2}$ mole) de chloro-3 chlorométhyl-2 propène-1. Après 8 heures de réaction, le produit a été repris dans $CH_2Cl_2$ et le précipité minéral a été séparé par filtration. Après évaporation du solvant, on a obtenu un liquide visqueux. Les masses molaires, données par l'analyse par chromatographie d'exclusion stérique sont : Mp = 69000 et Mn = 27000, en équivalent polystyrène.

5 g de ce polymère ont ensuite été dissous dans l'acétonitrile et l'on a ajouté à cette solution 2,49 g de trifluorosulfonylimidure de lithium (LiTFSI), le rapport O/Li étant de 8, et 0,1 g de peroxyde de benzoyle. Après dégazage et coulage de la solution, l'acétonitrile a été évaporé à l'étuve, puis la membrane obtenue a été maintenue à 70°C pendant 3 heures sous atmosphère d'argon pour achever la réticulation. L'étude par spectrométrie d'impédance (DSC) donne une valeur de $3.10^{-6}$ S/cm à 25°C et de $2.10^{-4}$ S/cm à 65°C. Un lavage avec $CH_2Cl_2$, suivi d'une extraction au Soxhlet avec le même solvant montre que 91% du polymère est réticulé.

EXEMPLE 2

Dans un ballon bicol muni d'un palier d'agitation mécanique et d'une ampoule à brome, on a introduit 5 g de poly (oxyéthylène) glycol de masse 1000 (commercialisé par Aldrich sous la référence 20,242-8) et 0,57 g de chloro-3 chlorométhyl-2 propène-1. Le mélange a été porté à 40°C sous forte agitation mécanique, puis on a ajouté 1,35 g d'hydroxyde de potassium finement broyé. Après 16 heures de réaction, le produit a été repris dans le THF, filtré pour éliminer le KOH restant et le KCl formé. Après évaporation du solvant, le produit a été repris à l'eau. Les traces de KOH restant ont été enlevées par une résine acide Dowex 50X2, (commercialisée par Dow Chemical), jusqu'à l'obtention d'un pH neutre. Ensuite l'eau a été évaporée. Les masses molaires, données par l'analyse par chromatographie d'exclusion stérique sont : Mp = 103000 et Mn = 46000, en équivalent polystyrène.

2 g de ce polymère ont ensuite été dissous dans l'acétonitrile et l'on a ajouté à cette solution 0,41 g de trifluorosulfonylimidure de lithium (LiTFSI), le rapport O/Li étant de 30, et 0,04 g de peroxyde de benzoyle pour réticuler les doubles liaisons. Après dégazage et coulage de la solution, l'acétonitrile a été évaporé à l'étuve, puis la membrane obtenue a été maintenue à 70°C pendant 3 heures pour achever la réticulation. L'étude par spectrométrie d'impédance donne une valeur de $10^{-5}$ S/cm à 25°C et de $2.10^{-4}$ S/cm à 65°C. Une étude de DSC a montré que le polymère réticulé présente une température de transition vitreuse de -56°C et une température de fusion de 21,3°C, en l'absence de sel. Pour une concentration en sel correspondant à O/Li = 30, le polymère présente une température de transition vitreuse de -52,1°C et une température de fusion de 10,6°C.

EXEMPLE 3

2 g du polymère obtenu après polycondensation dans l'exemple 2, 0,75 g de sel $CH_2=CH-CH_2-O-CF_2-CF_2-SO_3Li$

(pour O/Li = 14) et 0,03 g de peroxyde de benzoyle ont été dissous dans l'acétonitrile. On a repris le mode opératoire de l'exemple 2 pour préparer une membrane. Une extraction au Soxhlet avec du méthanol a montré que 80% du sel était fixé sur le polymère. Une étude par spectroscopie d'impédance a donné une valeur de $2.10^{-7}$ S/cm 20°C et de $10^{-5}$ S/cm à 50°C.

EXEMPLE 4

Dans un ballon bicol muni d'un palier d'agitation mécanique, on a introduit 5 g de poly(oxyéthylène) diamine (Jeffamine ED900 commercialisée par Texaco Chemicals), 0,66 g de chloro-3 chlorométhyl-2 propène-1. Le mélange a été porté à 40°C sous forte agitation mécanique, puis on a ajouté 3 g de résine basique (commercialisée par Dow Chemicals sous la référence Dowex 1X8-50). Après 10 heures de réaction, un polymère visqueux est obtenu, que l'on a dissous dans le THF. La solution a été filtrée pour éliminer la résine, puis le THF a été éliminé par évaporation. Les masses molaires, données par l'analyse par chromatographie d'exclusion stérique sont : Mp = 32000 et Mn = 14000, en équivalent polystyrène.

1 g de ce polymère a ensuite été dissous dans l'acétonitrile et l'on a ajouté à cette solution 0,34 g de sulfonylimidure de lithium (LiTFSI), le rapport O/Li étant de 14, et 0,06 g de peroxyde de benzoyle. Après dégazage et coulage de la solution, l'acétonitrile a été évaporé à l'étuve, puis la membrane obtenue a été maintenue à 70°C pendant 3 heures pour achever la réticulation. L'étude par spectrométrie d'impédance donne une valeur de $5.10^{-6}$ S/cm à 25°C.

EXEMPLE 5

Dans un ballon bicol muni d'un palier d'agitation mécanique, on a introduit 5 g de poly(oxypropylène) glycol de masse 1025 (commercialisé par Aldrich sous la référence 20,232-0) et 0,42 $cm^3$ de chloro-3 chlorométhyl-2 propène-1. Le mélange a été porté à 40°C sous forte agitation mécanique, puis on a ajouté 1,3 g d'hydroxyde de potassium finement broyé. Après 10 heures de réaction, le produit a été dissous dans l'eau. La solution aqueuse a été filtrée sur des cellules d'ultrafiltration (seuil de coupure 1000) pour éliminer le KOH restant et le KCl formé. Ensuite l'eau a été évaporée. Les masses molaires, données par l'analyse par chromatographie d'exclusion stérique sont : (Mp selon colonnes 200-1000 A) = 55000 et (Mn selon colonnes 200-1000 A) = 23000, en équivalent polystyrène.

2 g de ce polymère ont ensuite été dissous dans l'acétonitrile et l'on a ajouté à cette solution 0,04 g de peroxyde de benzoyle pour réticuler les doubles liaisons. Après dégazage et coulage de la solution, l'acétonitrile a été évaporé à l'étuve, puis la membrane obtenue a été maintenue à 70°C pendant 2 heures pour achever la réticulation. L'étude par spectrométrie d'impédance donne une valeur de $2.10^{-6}$ S/cm à 25°C et de $10^{-4}$ S/cm à 65°C.

EXEMPLE 6

Dans un ballon bicol muni d'un palier d'agitation mécanique, on a introduit 2 g de poly(oxyéthylène) diol de masse 400 (POE 400) (commercialisé par Aldrich sous la référence 20,239-8), 5 g de poly(oxyéthylène) diol de masse 1000 (POE 1000) (commercialisé par Aldrich sous la référence 20,242-8), et 1,24 g de chloro-3 chlorométhyl-2 propène-1. Le mélange a été porté à 40°C sous forte agitation mécanique, puis on a ajouté 3 g d'hydroxyde de potassium finement broyé. Après 10 heures de réaction, on a obtenu un produit de masse Mp = 72000 et Mn = 34000, en équivalent polystyrène. Le produit a été dissous dans le THF pour éliminer le KOH restant et le KCl formé. Après évaporation du THF, le produit a été solubilisé dans l'eau, et le KOH restant a été neutralisé par ajout d'une résine acide Amberlite IR118, commercialisée par Rohm & Haas. Ensuite le mélange a été filtré pour éliminer la résine, l'eau a été distillée et le séchage a été achevé dans un dessicateur sous vide à 50°C pendant 48 heures.

Le polymère obtenu a une température de fusion $T_f$ = 12,7°C, intermédiaire entre la température de fusion du POE 1000 et celle du POE 400. Cette faible température de fusion permet d'obtenir des complexes polymères-sel amorphes même pour de faibles concentrations en sel.

EXEMPLE 7

13 g de polytétrahydrofurane diol de masse 650 (commercialisé par Aldrich sous la référence 34,528-8) ont été mélangés intimement avec 6,7 g de KOH et le mélange a été porté à 45°C. Le mélange visqueux obtenu a été agité mécaniquement et on y a ajouté 2,5 g de chloro-1 chlorométhyl-2 propène. Le mélange réactionnel a ensuite été maintenu à 60°C pendant 15 heures, puis ramené à température ambiante. L'addition de 200 ml de dichlorométhane a provoqué la précipitation de KOH et de KCl, éliminés par filtration sur un creuset filtrant de porosité 4. La phase organique placée dans une ampoule à décanter a été lavée successivement par des solutions aqueuses d'acide dilué puis par de l'eau déminéralisée jusqu'à l'obtention d'un pH neutre. Elle a ensuite été séchée sur sulfate de magnésium, puis, après filtration, le solvant a été chassé à l'évaporateur rotatif. Afin d'éliminer par distillation azéotropique les

faibles quantités d'eau piégées par le polymère, l'on a ajouté à plusieurs reprises du toluène que l'on a chassé à l'évaporateur rotatif. L'on a ainsi récupéré 13,2 g de produit, ce qui correspond à un rendement d'environ 95%. Les masses fournies par l'analyse par chromatographie d'exclusion stérique sont Mp = 32000 et Mn = 15000, en équivalent polystyrène.

1,08 g du polymère obtenu ont été dissous dans 5 ml de THF, et l'on a ajouté 215 mg de LiTFSI pour obtenir un rapport O/Li de 20, ainsi que 30 mg de peroxyde de benzoyle. Après coulage de la solution visqueuse dans les conditions analogues à celles de l'exemple 2 et évaporation du THF, le film obtenu a été porté à 70°C pendant 5 heures. La membrane souple obtenue est légèrement colorée et présente de bonnes propriétés mécaniques. Sa conductivité est de $2.10^{-6}$ S/cm à 25°C et de $2.10^{-4}$ S/cm à 70°C. Le tracé d'Arrhenius $\log\sigma = f(1/T)$ montre un comportement de type volume libre dès la température ambiante, ce qui indique un caractère amorphe du complexe polymère/sel.

EXEMPLE 8

A un mélange de 10 g de poly(oxyéthylène) glycol de masse 1000 et de 1,2 g d'hexane diol-1,6, on a ajouté 7,8 g de KOH finement broyé et 5 g de chloro-3 chlorométhyl-2 propène-1. Le mélange a été porté à 70°C dans un ballon tricol muni d'une agitation mécanique, d'un condenseur à reflux et d'une arrivée d'argon. L'analyse du mélange réactionnel après 24 heures de réaction, réalisée par chromatographie d'exclusion stérique pratiquée sur deux colonnes d'Ultrastyragel de 100 A - technique qui permet une bonne séparation des oligomères et de monomères [Cf J. Y. Sanchez et al, Analysis, 18,577-81 (1990)] montre la consommation complète du polyéthylène glycol et d'environ 85% de l'hexane diol. Après un traitement identique à celui de l'exemple 7, l'analyse de masse donne Mp = 22000 et Mn = 9600.

A une solution de 2,12 g de ce polycondensat dans 15 ml d'acétonitrile, on a ajouté 0,83 g de LiTFSI et 32 mg de peroxyde de benzoyle. Après coulage du film, dégazage et évaporation du solvant, le film a été porté à 70°C et maintenu à cette température pendant 4 heures. La membrane obtenue a une conductivité de $8.10^{-7}$ S/cm à 20°C et de $4.10^{-5}$ S/cm à 60°C.

EXEMPLE 9

Un mélange de 2 g de poly(oxyéthylène) glycol 400 (PEG400) (commercialisé par Aldrich sous la référence 20,239-8), de 1,08 g de trans dibromo-1,4 butène-2 et de 1,2 g de KOH a été porté à 60°C et maintenu à cette température pendant 20 heures. L'analyse par chromatographie en phase vapeur a montré la disparition totale du composé dibromé dans le mélange réactionnel brut. Après dissolution dans le THF et élimination par filtration des produits minéraux, l'analyse du copolymère par chromatographie d'exclusion stérique a donné les masses suivantes: Mp = 20000 et Mn = 11000, en équivalent polystyrène.

Des essais de réticulation ont été effectués à 70°C avec le peroxyde de benzoyle pendant plusieurs heures. Le taux d'insoluble déterminé est de 20% et l'analyse par infrarouge à transformée de Fourier confirme le faible taux de consommation des doubles liaisons.

EXEMPLE 10

On a reproduit le mode opératoire de l'exemple 9, en remplaçant la moitié du trans dibromo-1,4 butène-2 par du chloro-3 chlorométhyl-2 propène-1.

A 2 g de PEG 400, on a ajouté 0,54 g de trans dibromo-1,4 butène-2 ($2,5.10^{-3}$ moles) et 0,31 g de chloro-3 chlorométhyl-2 propène-1 ($2,5.10^{-3}$ moles), puis 1,2 g de KOH finement broyée. Le mélange réactionnel a été agité mécaniquement pendant 15 heures à 60°C. Une analyse par chromatographie en phase vapeur montrait qu'il ne contenait alors plus de dérivé dichloré ou de dérivé dibromé. Le produit obtenu, isolé selon le mode opératoire de l'exemple 9, présente des caractéristiques proches de celles du produit de l'exemple 9 : Mp = 23000, Mn = 10500.

Le polycondensat a été réticulé à l'aide de peroxyde de benzoyle à 70°C pendant 4 heures. L'extraction au Soxhlet fait apparaître un taux d'insolubles voisin de 90%. L'analyse DSC du réseau ne permet pas de déceler, dans le domaine de températures de 193K à 423K, de pics de recristallisation ou de pics de fusion, qui seraient la preuve d'une cristallinité. La conductivité d'une membrane préparée dans des conditions analogues à celles des exemples précédents avec un rapport O/Li de 20 est de $4.10^{-5}$ S/cm à 25°C et de $10^{-3}$ S/cm à 65°C.

Le choix des proportions relatives de trans dibromo-1,4 butène-2 et de chloro-3 chlorométhyl-2 propène-1 permet ainsi d'ajuster le taux de réticulation du copolymère réticulé final.

EXEMPLE 11

Le dihydroxy-1,6-hexadiène-2,4 a été préparé par réduction de l'acide trans,trans-muconique (commercialisé par

Aldrich sous la référence M9000-3) par le complexe borane-THF. Le diol ainsi obtenu a été transformé en dérivé halogéné $(ClCH_2CH=CH-)_2$ par traitement par le chlorure de thionyle $SOCl_2$ et purifié par distillation sous pression réduite. Dans un ballon bicol muni d'un palier d'agitation mécanique et d'une ampoule à brome, on a introduit 8 g de poly(oxyéthylène) glycol de masse 1500 (commercialisé par Aldrich sous la référence 20243-6), 0,82 g de dichloro-1,6-hexadiène-2,4 et 5 ml de THF. Le mélange a été porté à 40°C sous forte agitation mécanique, puis on a ajouté 1 g d'hydroxyde de potassium commercial (à 85% de KOH) finement broyé. Après 16 heures de réaction, le produit a été dilué dans le THF, filtré pour éliminer le KOH restant et le KCl formé. Après évaporation du THF, le produit a été repris à l'eau, et le KOH restant a été neutralisé par ajout d'une résine acide DOWEX 50X2, commercialisée par Dow Chemical. Ensuite l'eau a été évaporée.

2 g du polymère obtenu ont ensuite été dissous dans l'acétonitrile et l'on a ajouté à cette solution 0,04 g de peroxyde de benzoyle et 0,56 g de LiTFSI (O/Li = 30/1). Après dégazage et coulage de la solution, l'acétonitrile a été évaporé à l'étuve, puis la membrane obtenue a été maintenue à 70°C pendant 3 heures sous flux d'argon pour achever la réticulation. L'étude par spectrométrie d'impédance donne une valeur de $1,2.10^{-5}$ S/cm à 25°C.

EXEMPLE 12

Le bis 2,4(chlorométhyl)styrène a été préparé en faisant passer un courant de chlorure d'hydrogène anhydre dans un mélange de styrène et de diméthoxyméthane maintenu à 40°C. Le composé $CH_2=CH\Phi(CH_2Cl)_2$ a été purifié par distillation. Une polymérisation par polycondensation a été obtenue en faisant réagir, dans les conditions de l'exemple 11, 30 g d'un co(polyoxyéthylène-polyoxypropylène)diol de masse 3500 et contenant 15% en moles d'unités dérivées d'oxyde de propylène, dilués dans 20 ml de THF, 1,75 g de bis 2,4(chlorométhyl) styrène, et 1,5 g d'hydroxyde de potassium commercial (85% de KOH) broyé. Après 12 heures de réaction à 0°C, le polymère obtenu a été purifié dans les conditions de l'exemple 11.

Une membrane a été préparée par dissolution de 5 g de polymère, 0,55 g de perchlorate de lithium et 0,08 g d'acide azobiscyanovalérique dans 5 ml d'acétone. Le mélange a été épandu pour former une couche de 100 µm sur une plaque de verre sur laquelle ont été déposés par pulvérisation cathodique 300 nm d'un oxyde d'indium dopé (ITO), puis 100 nm d'oxyde de tungstène $WO_3$. L'acétone a été évaporé. Une autre plaque de verre recouverte d'ITO et de 200 nm d'un oxyde mixte de lithium, de cérium et de titane, de composition $Li_{0,5}CeTiO_4$, a été placée au-dessus de la première et maintenue écartée de 50 µm par des cales, puis chauffée à 70°C sous un flux d'argon pendant 3 heures pour obtenir la réticulation du polymère. Ce montage, dont l'étanchéité était réalisée par scellement des deux plaques par une résine de type époxy, contitue un dispositif électrochrome dont le fonctionnement est assuré par application d'une tension de 1,5 V. Lorsque le pôle - est relié à l'électrode d'oxyde de tungstène, le système est coloré en bleu. L'inversion de la polarité amène le retour à l'état incolore.

EXEMPLE 13

Un polymère réticulable de structure branchée a été préparé par polycondensation d'un mélange de segments tri-fonctionnels et de segments mono-fonctionnels.

Dans un ballon bicol muni d'un palier d'agitation mécanique, on a introduit 6 g de poly(oxyéthylène) triol (POE triol) de masse 2000 commercialisé par la société Dai-Ichi Kogyo Seiyaku, 1,8 g de l'éther monométhylique du polyéthylène glycol de masse 600 et 0,75 g de chloro-3 chlorométhyl-2 propène-1. Le mélange a été porté à 45°C sous forte agitation mécanique, puis on a ajouté 10 ml de THF et 1,8 g de potasse commerciale finement broyée. Après 10 heures de réaction, le produit a été dissous dans l'eau. La solution aqueuse a été filtrée sur des cellules d'ultrafiltration (seuil de coupure 5000) pour éliminer le KOH restant et le KCl formé. Ensuite l'eau a été évaporée.

Une membrane a été formée avec le polymère obtenu et le sel LiTFSI (O/Li = 18/1) et réticulée par le peroxyde de benzoyle. La conductivité ionique obtenue est de $4.10^{-5}$ S/cm à 25°C.

Des propriétés de conductivité similaires ont été obtenues en utilisant un POE tetrol préparé par polymérisation anionique de l'oxyde d'éthylène à partir de pentaérythritol. Dans ce cas, le rapport molaire entre les segments mono- et tétra-fonctionnels était de 2/1 pour obtenir une fonctionnalité moyenne en groupements hydroxyles de 2.

EXEMPLE 14

Dans un réacteur, on a introduit 500 g de poly(éthylène glycol) de masse 600 et 200 ml de THF. On a ajouté 21 g de chloro-3 chlorométhyl-2 propène-1 (commercialisé par Aldrich sous la référence C3,110-4) et 116 g de $\alpha,\alpha'$dichlorométaxylène (commercialisé par Aldrich sous la référence 10,598-8). Après homogénéisation du mélange, on y a dispersé par agitation mécanique 150 g d'hydroxyde de sodium broyé en grains de taille $\leq$ 50 µm et la température a été portée à 50°C. Après 10 heures, le polymère a été séparé et purifié selon le mode opératoire de l'exemple 11. Après incorporation du LiTFSI (O/Li = 24/1) et réticulation, on a obtenu un matériau élastique et adhésif dont la densité

de noeuds de réticulation est réduite à 0,26 mole/kg et dont la conductivité atteint $2.10^{-5}$ S/cm à 20°C.

Des résultats analogues ont été obtenus en reproduisant le mode opératoire de l'exemple 14, en remplaçant le $\alpha,\alpha$'dichlorométaxylène par le dichlorométhane.

EXEMPLE 15

Un agent de couplage, le bis[(toluènesulfonyl méthyl)-2,5-furane], a été obtenu par action d'un mélange équimoléculaire de chlorure de toluènesulfonyle et de 2,6 diméthyl pyridine sur le 2,5 furanediméthanol (commercialisé par Aldrich sous la référence 19,461-1).

A 10 g de poly(éthylène glycol) de masse 2000 et 5 ml de THF, on a ajouté 2,2 g de l'agent de couplage précité et 0,8 g d'hydroxyde de potassium commercial (85% de KOH) finement broyé. Après 16 heures de réaction, le produit a été dilué dans le THF, filtré pour éliminer KOH en excès et $KCH_3\Phi SO_3$ formé par la réaction de polycondensation. Le solvant a été évaporé, le produit a été repris à l'eau et lavé par ultrafiltration (coupure $M \geq 5000$). Le polymère obtenu peut être auto-réticulé après incorporation de LiTFSI (O/Li = 14/1) par chauffage à 180°C pendant 10 minutes.

EXEMPLE 16

Dans un ballon bicol muni d'un palier d'agitation mécanique, on a introduit 0,5 g d'hexanediol-1,6 et 0,4 $cm^3$ de chloro-3 chlorométhyl-2 propène-1. Le mélange a été porté à 40°C sous forte agitation mécanique, puis on a ajouté 1,2 g d'hydroxyde de potassium finement broyé. Après 8 heures de réaction, le produit a été dissous dans le THF. La solution a été filtrée pour éliminer les sels minéraux (KOH et KCl). Le THF a été éliminé. Ensuite le produit a été repris dans l'eau et neutralisé à l'aide d'une résine acide Dowex 50X2 commercialisée par Dow Chemical. La résine a été éliminée par filtration et l'eau par évaporation. Les masses molaires, données par l'analyse par chromatographie d'exclusion stérique sont : Mn = 2500 et Mp = 4000, en équivalent polystyrène.

**Revendications**

1. Copolymère réticulable constitué par des segments organiques A non réticulables par voie radicalaire ou par une réaction de Diels Alder identiques ou différents ayant chacun une valence i telle que $1 \leq i \leq 6$ et des segments Z $(CH_2)_j$ identiques ou différents dans chacun desquels Z représente un radical organique ayant une valence j telle que $1 \leq j \leq 6$, les radicaux Z possédant en outre au moins une fonction permettant une réticulation par voie radicalaire ou par une réaction de Diels Alder, *les radicaux Z ne possédant pas de groupe -CBr=CBr- ;*

   - chaque segment A étant relié à au moins un segment $Z(CH_2)_j$ par une fonction Y et chaque segment $Z(CH_2)_j$ étant relié à au moins un segment A par une fonction Y, la fonction Y étant une fonction éther ou une fonction amine -NR- telle que R représente un atome d'hydrogène ou un radical organique ayant au plus 30 atomes de carbone choisi parmi les radicaux alkyles, les radicaux aryles, les radicaux arylalkyles et les radicaux oxaalkyles.
   - la moyenne molaire pondérée de i et la moyenne molaire pondérée de j étant chacune supérieure ou égale à 2.

2. Copolymère selon la revendication 1, caractérisé en ce qu'au moins une partie des segments A sont des segments solvatants.

3. Copolymère selon la revendication 2, caractérisé en ce que les segments solvatants sont choisis parmi les homopolymères d'oxyde d'éthylène ou d'oxyde de propylène, les copolymères d'oxyde d'éthylène et d'oxyde de propylène, les copolymères d'oxyde d'éthylène ou d'oxyde de propylène avec un comonomère polymérisable par formation de liaisons éthers.

4. Copolymère selon la revendication 3, caractérisé en ce le comonomère polymérisable par formation de liaisons éthers est choisi parmi l'oxyméthylène, l'oxétane, le tétrahydro furane, le méthylglycidyléther et le dioxolane.

5. Copolymère selon la revendication 1, caractérisé en ce qu'au moins une partie des segments A sont des segments non solvatants.

6. Copolymère selon la revendication 5, caractérisé en ce les segments non solvatants sont choisis parmi les radicaux alkylènes, les radicaux arylènes, les radicaux arylalkylènes, les segments polysiloxanes.

**7.** Copolymère selon la revendication 1, caractérisé en ce que les radicaux Z possèdent une double liaison éthylénique ou une fonction susceptible de s'engager dans une réaction de Diels Alder.

**8.** Copolymère selon la revendication 1, caractérisé en ce que le radical Z est choisi parmi les radicaux Z dans lesquels l'atome de carbone lié au groupe $CH_2$ du segment $Z(CH_2)_j$ fait partie d'une double liaison, d'un noyau aromatique, d'une fonction cétone ou d'une fonction nitrile, ou dans lesquels l'atome de carbone lié au groupe $CH_2$ du segment $Z(CH_2)_j$ est remplacé par un atome de soufre faisant partie d'une fonction sulfone.

**9.** Copolymère selon la revendication 1, caractérisé en ce qu'une partie des segments $Z(CH_2)_j$ est remplacée par des segments $Z'(CH_2)_{j'}$, dans lesquelles Z' est un radical qui a la valence j' et qui ne possède pas de liaisons réactives vis-à-vis de la réticulation radicalaire pour un amorceur radicalaire donné, la moyenne molaire pondérée de l'ensemble j et j' étant supérieure ou égale à 2.

**10.** Copolymère selon la revendication 9, caractérisé en ce que le radical Z' est choisi parmi les radicaux Z' dans lesquels l'atome de carbone lié au groupe $CH_2$ du segment $Z'(CH_2)_{j'}$, fait partie d'une double liaison encombrée, d'un noyau aromatique, d'une fonction cétone ou d'une fonction nitrile ou dans lesquels l'atome de carbone lié au groupe $CH_2$ du segment $Z'(CH_2X)_{j'}$, est remplacé par un atome de soufre faisant partie d'une fonction sulfone.

**11.** Copolymère selon la revendication 10, caractérisé en ce que les radicaux Z' sont choisis parmi les radicaux poly (méthylène)arylène.

**12.** Procédé de préparation d'un copolymère selon la revendication 1, caractérisé en ce qu'il consiste à effectuer une réaction de polycondensation en présence d'une base B, d'au moins un composé $A(YH)_i$ avec au moins un composé $Z(CH_2X)_j$, A, i, Y, Z et j ayant les significations données ci-dessus, X étant un groupe partant, les proportions relatives des différents $A(YH)_i$ étant telles que le rapport du nombre de radicaux Y au nombre de segments A soit au moins égal à 2, les proportions relatives des différents $Z(CH_2X)_j$ étant telles que le rapport du nombre de radicaux X au nombre de segments Z soit au moins égal à 2.

**13.** Procédé selon la revendication 12, caractérisé en ce que le groupe partant X est un halogénure ou un sulfate $R'OSO_3$ ou un sulfonate $R'SO_3$ dans lesquels R' représente un groupe organique halogéné ou non, ayant moins de 20 atomes de carbone.

**14.** Procédé selon la revendication 13, caractérisé en ce que R' est choisi parmi les groupes alkyles, les groupes aryles et les groupes alkylaryles.

**15.** Procédé selon la revendication 12, caractérisé en ce que la base B est choisie les hydroxydes de métaux alcalins ou alcalino-terreux, les hydroxydes d'ammoniums quaternaires, en particulier les résines échangeuses d'anions contenant des groupements benzyltrialkylammonium sous forme d'hydroxyde, les hydrures, les amidures ou les alkoxydes de métaux alcalins ou alcalino-terreux, les bases organiques non nucléophiles et difficilement quaternisables.

**16.** Procédé selon la revendication 12, caractérisé en ce qu'une partie des molécules $Z(CH_2X)_j$ est remplacée par des molécules $Z'(CH_2X)_{j'}$, dans lesquelles Z' ne possède pas de liaisons réactives vis-à-vis de la réticulation radicalaire pour un amorceur radicalaire donné, les proportions relatives des différents $Z(CH_2X)_j$ et $Z'(CH_2X)_{j'}$, étant telles que le rapport du nombre de radicaux X au nombre de segments Z et Z' soit au moins égal à 2.

**17.** Procédé selon l'une des revendications 12 ou 16, caractérisé en ce que le radical Z et/ou le radical Z' possèdent des fonctions capables d'augmenter la réactivité des groupes partants X vis à vis des substitutions nucléophiles.

**18.** Matériau à conduction ionique, contenant un sel et un solvant solide polymère, caractérisé en ce que le solvant polymère est constitué essentiellement par au moins un copolymère selon la revendication 2.

**19.** Matériau selon la revendication 18, caractérisé en ce que le copolymère est réticulé.

**20.** Matériau selon la revendication 18, caractérisé en ce que le sel est choisi parmi les sels $(1/mM)^{+}X^{3-}$, M représentant un ion d'un métal ayant la valence m, choisi parmi les métaux alcalins, les métaux alcalino-terreux, les métaux de transition et les terres rares, ou les ions ammonium, amidinium ou guanidinium ; $X^3$ représentant un anion à charge électronique délocalisée, par exemple $Br^-$, $ClO_4^-$, $AsF_6^-$, $R_FSO_3^-$, $(R_FSO_2)_2N^-$, $(R_FSO_2)_3C^-$, ou $(R_FSO_2)_2CY^{1-}$, $R_F$

représentant un groupement perfluoroalkyle ou perfluoroaryle et $Y^1$ représentant un groupe attracteur d'électrons.

**21.** Matériau selon la revendication 18, caractérisé en ce qu'il est obtenu par réticulation du copolymère en présence d'un amorceur de réticulation et d'un monomère comportant un groupement ionique et un groupement polymérisable par voie radicalaire.

**22.** Matériau selon la revendication 18, comprenant une solution solide d'un ou plusieurs sels dans le copolymère, caractérisé en ce que le transport et la mobilité d'un cation métallique $M'^{n+}$ ayant la valence n sont assurés par au moins un anion complexe correspondant à la formule générale $[M'(Z^3)_n(Y^3)_p]p-$, formé entre un ligand anionique $(Z^3)$-, un ligand anionique $(Y^3)^-$ et le cation $M'^{n+}$, avec $1 \leq n \leq 5$ et $1 \leq p \leq 3$.

**23.** Cellule électrochimique comprenant une électrode positive et une électrode négative séparées par un électrolyte solide polymère, caractérisée en ce que l'électrolyte comprend un matériau selon l'une des revendications 18 à 22.

**24.** Générateur électrochimique rechargeable ou non, comprenant une électrode positive et une électrode négative séparées par un électrolyte solide polymère, caractérisé en ce que l'électrolyte comprend un matériau selon l'une des revendications 18 à 22.

## Patentansprüche

**1.** Vernetzbares Copolymer, bestehend aus identischen oder voneinander verschiedenen organischen Segmenten A, die radikalisch oder durch Diels-Alder-Reaktion nicht vernetzbar sind und jeweils eine Wertigkeit i aufweisen, für die gilt: $1 \leq i \leq 6$, sowie aus identischen oder voneinander verschiedenen Segmenten $Z(CH_2)_j$, worin jeder Rest Z einen organischen Rest mit einer Wertigkeit j darstellt, für die gilt: $1 \leq j \leq 6$, wobei die Reste Z außerdem zumindest eine Funktionalität aufweisen, die eine radikalische Vernetzung oder eine Vernetzung mittels Diels Alder-Reaktion ermöglicht, wobei die Reste Z keine Gruppe -CBr=CBr- aufweisen;

wobei jedes Segment A über eine Funktionalität Y mit zumindest einem Segment $Z(CH_2)_j$ verbunden ist und jedes Segment $Z(CH_2)_j$ über eine Funktionalität Y mit zumindest einem Segment A verbunden ist, wobei die Funktionalität Y eine Etherfunktionalität oder eine Aminofunktionalität -NR- ist, wobei R ein Wasserstoffatom oder ein organischer Rest mit maximal 30 Kohlenstoffatomen ist, der aus Alkylresten, Arylresten, Arylalkylresten und Oxaalkylresten ausgewählt ist;
wobei das gewogene Molmittel von i und das gewogene Molmittel von j jeweils gleich 2 oder mehr ist.

**2.** Copolymer nach Anspruch 1, dadurch gekennzeichnet, daß zumindest ein Teil der Segmente A solvatisierende Segmente sind.

**3.** Copolymer nach Anspruch 2, dadurch gekennzeichnet, daß die solvatisierenden Segmente aus Ethylenoxid- oder Propylenoxid-Homopolymer, Ethylenoxid/Propylenoxid-Copolymeren, und Copolymeren von Ethylenoxid- oder Propylenoxid mit einem durch Bildung von Etherbindungen polymerisierbaren Comonomer ausgewählt sind.

**4.** Copolymer nach Anspruch 3, dadurch gekennzeichnet, daß das durch Bildung von Etherbindungen polymerisierbare Comonomer aus Oxymethylen, Oxethan, Tetrahydrofuran, Methylglycidylether und Dioxolan ausgewählt ist.

**5.** Copolymer nach Anspruch 1, dadurch gekennzeichnet, daß zumindest ein Teil der Segmente A nicht-solvatisierende Segmente sind.

**6.** Copolymer nach Anspruch 5, dadurch gekennzeichnet, daß die nicht-solvatisierenden Segmente aus Alkylenresten, Arylenresten, Arylalkylenresten und Polysiloxansegmenten ausgewählt sind.

**7.** Copolymer nach Anspruch 1, dadurch gekennzeichnet, daß die Reste Z eine ethylenische Doppelbindung oder eine Funktionalität aufweisen, die fähig ist, Diels-Alder-Reaktionen einzugehen.

**8.** Copolymer nach Anspruch 1, dadurch gekennzeichnet, daß der Rest Z aus jenen Resten Z ausgewählt ist, in denen das mit der Gruppe $CH_2$ des Segments $Z(CH_2)_j$ verbundene Kohlenstoffatom Teil einer Doppelbindung, eines aromatischen Rings, einer Ketonfunktionalität und einer Nitrilfunktionalität ist, oder worin das mit der Gruppe $CH_2$ des Segments $Z(CH_2)_j$ verbundene Kohlenstoffatom durch ein Schwefelatom ersetzt ist, das Teil einer Sulfonfunktionalität ist.

**9.** Copolymer nach Anspruch 1, dadurch gekennzeichnet, daß ein Teil der Segmente $Z(CH_2)_j$ durch Segmente $Z'(CH_2)_{j'}$ ersetzt ist, worin Z' ein Rest ist, der die Wertigkeit j' aufweist und keine gegenüber radikalischer Vernetzung durch einen bestimmten Radikalinitator reaktiven Bindungen aufweist, wobei das gewogene Molmittel der Summe von j und j' gleich 2 oder mehr beträgt.

**10.** Copolymer nach Anspruch 9, dadurch gekennzeichnet, daß der Rest Z' aus jenen Resten Z' ausgewählt ist, in denen das mit der Gruppe $CH_2$ des Segments $Z'(CH_2)_{j'}$ verbundene Kohlenstoffatom Teil einer sterisch gehinderten Doppelbindung, eines aromatischen Rings, einer Ketonfunktionalität oder einer Nitrilfunktionalität ist oder worin das mit der Gruppe $CH_2$ des Segments $Z'(CH_2X)_{j'}$ verbundene Kohlenstoffatom durch ein Schwefelatom ersetzt ist, das Teil einer Sulfonfunktionalität ist.

**11.** Copolymer nach Anspruch 10, dadurch gekennzeichnet, daß die Reste Z' aus Poly(methylen)arylenresten ausgewählt sind.

**12.** Verfahren zur Herstellung eines Copolymers nach Anspruch 1, dadurch gekennzeichnet, daß es darin besteht, eine Polykondensationsreaktion zumindest einer Verbindung $A(YH)_i$ mit zumindest einer Verbindung $Z(CH_2X)_j$ in Gegenwart einer Base B durchzuführen, wobei A, i, Y, Z und j die oben angeführte Bedeutung haben, X eine Abgangsgruppe ist, wobei die relativen Anteile der verschiedenen Verbindungen $A(YH)_i$ so gewählt sind, daß das Verhältnis zwischen der Anzahl an Resten Y und der Anzahl an Segmenten A zumindest gleich 2 ist, wobei die relativen Anteile der verschiedenen Verbindungen $Z(CH_2X)_j$ so gewählt sind, daß das Zahlenverhältnis zwischen den Resten Z und den Resten Z zumindest gleich 2 ist.

**13.** Verfahren nach Anspruch 12, dadurch gekennzeichnet, daß die Abgangsgruppe X ein Halogenid oder ein Sulfat $R'OSO_3$ oder ein Sulfonat $R'SO_3$ ist, worin R' eine halogenierte oder nichthalogenierte organische Gruppe darstellt, die zumindest 20 Kohlenstoffatome aufweist.

**14.** Verfahren nach Anspruch 13, dadurch gekennzeichnet, daß R' aus Alkylgruppen, Arylgruppen und Alkylarylgruppen ausgewählt ist.

**15.** Verfahren nach Anspruch 12, dadurch gekennzeichnet, daß die Base B aus Alkalimetall- oder Erdalkalimetallhydroxiden, quaternären Ammoniumhydroxiden, insbesondere aus Anionenaustauschharzen, die Benzyltrialkylammoniumgruppen in Hydroxidform enthalten, Hydriden, Amiden oder Alkoxiden von Alkali- oder Erdalkalimetallen, sowie nicht-nukleophilen und schwer quaternisierbaren organischen Basen ausgewählt sind.

**16.** Verfahren nach Anspruch 12, dadurch gekennzeichnet, daß ein Teil der Moleküle $Z(CH_2X)_j$ durch Moleküle $Z'(CH_2X)_{j'}$ ersetzt ist, in denen Z' keine Bindungen aufweist, die gegenüber radikalischer Vernetzung mit einem bestimmten Radikalinitiator reaktiv sind, wobei die relativen Anteile der verschiedenen $Z(CH_2X)_j$ und $Z'(CH_2X)_{j'}$ so gewählt sind, daß das Zahlenverhältnis zwischen den Resten X und den Segmenten Z und Z' zumindest gleich 2 ist.

**17.** Verfahren nach einem der Ansprüche 12 oder 16, dadurch gekennzeichnet, daß der Rest Z und/oder der Rest Z' Funktionalitäten aufweist/aufweisen, die fähig sind, das Reaktionsvermögen der Abgangsgruppen X gegenüber nukleophiler Substitution zu erhöhen.

**18.** Ionenleitendes Material, das ein Salz und ein festes Polymer-Lösungsmittel enthält, dadurch gekennzeichnet, daß das Polymerlösungsmittel im wesentlichen aus zumindest einem Copolymer nach Anspruch 2 besteht.

**19.** Material nach Anspruch 18, dadurch gekennzeichnet, daß das Copolymer vernetzt ist.

**20.** Material nach Anspruch 18, dadurch gekennzeichnet, daß das Salz aus Salzen $(1/mM)^+X^{3-}$ ausgewählt ist, wobei M ein Ion eines Metalls mit der Wertigkeit m darstellt, das aus Alkalimetallen, Erdalkalimetallen, Übergangmetallen und seltenen Erden oder Ammonium-, Amidinium- oder Guanidinium-Ionen ausgewählt ist; $X^3$ ein Anion mit delokalisierter elektrischer Ladung darstellt, beispielsweise $Br^-$, $ClO_4^-$, $AsF_6^-$, $R_FSO_3^-$, $(R_FSO_2)_2N^-$, $(R_FSO_2)_3C^-$ oder $(R_FSO_2)_2CY^{1-}$, wobei $R_F$ eine Perfluoralkyl- oder Perfluorarylgruppe darstellt und $Y^1$ eine elektronenanziehende Gruppe darstellt.

**21.** Material nach Anspruch 18, dadurch gekennzeichnet, daß es durch Vernetzung des Copolymers in Gegenwart eines Vernetzungsinitiators und eines Monomers erhalten wird, das eine ionische Gruppe und eine radikalisch polymerisierbare Gruppe umfaßt.

**22.** Material nach Anspruch 18, das eine feste Lösung eines oder mehrerer Salze im Copolymer umfaßt, dadurch gekennzeichnet, daß der Transport und die Mobilität eines Metallkations $M'^{n+}$ mit der Wertigkeit n durch zumindest ein Komplexanion der allgemeinen Formel $[M'(Z^3)_n(Y^3)_p]^{p-}$ gewährleistet sind, das aus einem anionischen Liganden $(Z^3)^-$, einem anionischen Liganden $(Y^3)^-$ und dem Kation $M'^{n+}$ gebildet wird, wobei gilt: $1 \leq n \leq 5$ und $1 \leq p \leq 3$.

**23.** Elektrochemische Zelle, die eine positive Elektrode und eine negative Elektrode umfaßt, die durch einen festen Polymerelektrolyten getrennt sind, dadurch gekennzeichnet, daß der Elektrolyt ein Material nach einem der Ansprüche 18 bis 22 umfaßt.

**24.** Wiederaufladbarer oder nicht-wiederaufladbarer elektrochemischer Stromerzeuger, der eine positive und eine negative Elektrode umfaßt, die durch einen festen Polymerelektrolyten getrennt sind, dadurch gekennzeichnet, daß der Elektrolyt ein Material nach einem der Ansprüche 18 bis 22 umfaßt.

**Claims**

**1.** A crosslinkable copolymer consisting of identical or different organic blocks A which cannot be crosslinked by a radical route or by a Diels-Alder reaction, each of which has a valency i such that $1 \leq i \leq 6$ and identical or different blocks $Z(CH_2)_j$, in each of which Z denotes an organic radical which has a valency j such that $1 \leq j \leq 6$, the radicals Z additionally containing at least one functional group permitting crosslinking by a radical route or by a Diels-Alder reaction, said radicals Z having no -CBr = CBr-group ;

- each block A being joined to at least one block $Z(CH_2)_j$ by a functional group Y and each block $Z(CH_2)_j$ being joined to at least one block A by a functional group Y, the functional group Y being an ether functional group or an amine functional group -NR- wherein R denotes a hydrogen atom or an organic radical containing not more than 30 carbon atoms and chosen from alkyl radicals, aryl radicals, arylalkyl radicals and oxaalkyl radicals ;
- the weighted molar mean of i and the weighted molar mean of j each being higher than or equal to 2.

**2.** A copolymer according to Claim 1, characterized in that at least a proportion of the blocs A are solvating blocks.

**3.** A copolymer according to Claim 2, characterized in that the solvating blocks are chosen from homopolymers of ethylene oxide or of propylene oxide, copolymers of ethylene oxide and of propylene oxide, and copolymers of ethylene oxide or propylene oxide with a comonomer polymerizable by forming ether bonds.

**4.** A copolymer according to Claim 3, characterized in that the comonomer polymerizable by forming ether bonds is chosen from oxymethylene, oxetane, tetrahydro furan, methyl glycidyl ether and dioxolane.

**5.** A copolymer according to Claim 1, characterized in that at least a proportion of blocks A are nonsolvating blocks.

**6.** A copolymer according to Claim 5, characterized in that the nonsolvating blocks are chosen from alkylene radicals, arylene radicals, arylalkylene radicals and polysiloxane blocks.

**7.** A copolymer according to Claim 1, characterized in that the radicals Z have an ethylenic double bond or a functional group capable of being involved in a Diels-Alder reaction.

**8.** A copolymer according to Claim 1, characterized in that the radicals Z is chosen from the radicals Z in which the carbon atom bonded to the $CH_2$ group of the block $Z(CH_2)_j$ forms part of a double bond, of an aromatic nucleus, of a ketone functional group, of a nitrile functional group, or in which the carbon atom bonded to the $CH_2$ group of the bloc $Z(CH_2)_j$ is replaced by a sulfur atom forming part of a sulfone functional group.

**9.** A copolymer according to Claim 1, characterized in that a proportion of the blocks $Z(CH_2)_j$ is replaced by blocs $Z'(CH_2)_j$, in which Z' is a radical which has the valency j' and which does not have any bonds reactive towards radical crosslinking with a given radical initiator, the weighted molar mean of the combination j and j' being higher than or

equal to 2.

**10.** A copolymer according to Claim 9, characterized in that the radical Z' is chosen from the radicals Z' in wich the carbon atom bonded to the $CH_2$ group of the block $Z'(CH_2)_j$, forms part of a hindered double bond, of an aromatic nucleus, of a ketone functional group, of a nitrile functional group, or in which the carbon atom bonded to the $CH_2$ group of the block $Z'(CH_2X)_j$, is replaced by a sulfur atom forming part of a sulfone functional group.

**11.** A copolymer according to Claim 10, characterized in that the radicals Z' are chosen from poly(methylene)-arylene radicals.

**12.** A process for the preparation of a copolymer according to Claim 1, characterized in that it consists in performing a polycondensation reaction in the presence of a base B, of at least one compound $A(YH)_i$ with at least one compound $Z(CH_2X)_j$, A, i, Y, Z and j having the meanings given above, X being a leaving group, the relative proportions of the different compounds $A(YH)_i$ being such that the ratio of the number of radicals Y to the number of blocks A is at least equal to 2, the relative proportions of the different compounds $Z(CH_2X)_j$ being such that the ratio of the number of radicals X to the number of blocks Z is at least 2.

**13.** A process according to Claim 12, characterized in that the leaving group X is a halide or a sulfate $R'OSO_3$ or a sulfonate $R'SO_3$, in wich R' denotes an organic group, halogenated or otherwise, containing fewer than 20 carbon atoms.

**14.** A process according to Claim 13, characterized in that R' is chosen from alkyl groups, aryl groups and alkylaryl groups.

**15.** A process according to Claim 12, characterized in that the base B is chosen from alkali or alkaline-earth metal hydroxides, quaternary ammonium hydroxides, in particular anion exchange resins containing benzyltrialkylammonium groups in the form of hydroxide, alkali or alkaline-earth metal hydrides, amides and alkoxides, amides and alkoxides, and non nucleophilic organic bases which are difficult to quaternize.

**16.** A process according to Claim 12, characterized in that a proportion of the molecules $Z(CH_2X)_j$ is replaced with molecules $Z'(CH_2X)_j$, in which Z' does not have any bonds which are reactive in radical crosslinking with a given radical initiator, the relative proportions of the different $Z(CH_2X)_j$ and $Z'(CH_2X)_j$, being such that the ratio of the number of radicals X to the number of blocks Z and Z' is at least 2.

**17.** A process according to either of Claims 12 and 16, characterized in that the radical Z and/or the radical Z' have functional groups capable of increasing the reactivity of the leaving groups X towards nucleophilic substitutions.

**18.** An ionically conductive material containing a salt and a polymeric solid solvent, characterized in that the polymeric solvent consists essentially of at least one copolymer according to Claim 2.

**19.** A material according to Claim 18, characterized in that the copolymer is crosslinked.

**20.** A material according to Claim 18, characterized in that the salt is chosen from the salts $(1/mM)^+ X^{3-}$, M denoting an ion of a metal which has the valency m and is chosen from alkali metals, alkaline-earth metals, transition metals and the rare earths, or the ammonium, amidinium or guanidinium ions ; $X^3$ denoting an anion with delocalized electronic charge, for example $Br^-$, $ClO_4^-$, $AsF_6^-$, $R_FSO_3^-$, $(R_FSO_2)_2N^-$, $(R_FSO_2)_3C^-$ or $(R_FSO_2)_2CY^{1-}$, $R_F$ denoting a perfluoroalkyl or perfluoroaryl group and $Y^1$ denoting an electro-withdrawing group.

**21.** A material according to Claim 18, characterized in taht it is obtained by crosslinking the copolymer in the presence of a crosslinking initiator and of a monomer containing an ionic group and a group which is polymerizable by a radical route.

**22.** A material according to Claim 18, comprising a solid solution of one or more salts in the copolymer, characterized in that the transport and the mobility of a metal cation $M'^{n+}$ wich has the valency n are provided by at least one complex anion corresponding to the general formula $[M'(Z^3)_n(Y^3)_p]^{p-}$, formed between an anionic ligand $(Z^3)^-$, an anionic ligand $(Y^3)^-$ and the cation $M'^{n+}$, with $1 \leq n \leq 5$ and $1 \leq p \leq 3$.

**23.** An electrochemical cell comprising a positive electrode and a negative electrode which are separated by a polymeric solid electrolyte, characterized in that the electrolyte comprises a material according to one of Claims 18 to 22.

**24.** An electrochemical generator, rechargeable or otherwise, comprising a positive electrode and a negative electrode which are separated by a polymeric solid electrolyte, characterized in that the electrolyte comprises a material according to one of Claims 18 to 22.